# FASCICULE DE BREVET EUROPEEN

(11) **EP 3 202 166 B1**
(45) Date de publication et mention de la délivrance du brevet: **23.11.2022**
(21) Numéro de dépôt: 15781128.2
(22) Date de dépôt: 29.09.2015
(51) Int. Cl.: H04W 4/00, H04W 40/24, H04W 88/04

(54) **TECHNIQUE D'ACCES PAR UN DISPOSITIF MAITRE A UNE VALEUR PRISE PAR UNE CARACTERISTIQUE GEREE PAR UN DISPOSITIF PERIPHERIQUE**
VERFAHREN FÜR DEN ZUGRIFF DURCH EINE MASTER-VORRICHTUNG ZU EINEM WERT EINER EIGENSCHAFT MIT VERWALTUNG DURCH PERIPHERE VORRICHTUNG
TECHNIQUE FOR ACCESS BY A MASTER DEVICE TO A VALUE TAKEN BY A CHARACTERISTIC MANAGED BY A PERIPHERAL DEVICE

(30) Priorité: 30.09.2014 FR 1459280
(43) Date de publication de la demande: 09.08.2017
(73) Titulaire: Orange, 92130 Issy-les-Moulineaux (FR)
(72) Inventeur: YAN, Han, 92800 Puteaux (FR); FONTAINE, Fabrice, F-35850 Geveze (FR)
(86) Numéro de dépôt international: PCT/FR2015/052596
(87) Numéro de publication internationale: WO 2016/051074

(56) Documents cités:
- EP-A1- 1 742 153
- WO-A1-2013/086036
- GB-A- 2 512 256
- US-A1- 2011 161 111
- US-A1- 2014 121 473
- US-A1- 2014 159 877
- US-A1- 2014 167 928

## Description

L'invention se rapporte au domaine général des télécommunications.

L'invention concerne plus particulièrement une technique d'accès par un dispositif maître à une valeur prise par une caractéristique gérée par un dispositif périphérique. A cet effet, deux dispositifs relais coopèrent dans une zone de service d'un réseau local. Un des deux dispositifs relais est en relation avec le dispositif maître et l'autre dispositif relais est en relation avec le dispositif périphérique.

Un réseau résidentiel comprend des équipements ou dispositifs localisés dans un site client. Ces dispositifs sont également appelés CPE, pour « Customer Premise Equipment ». Pour un réseau local, il s'agit notamment d'une passerelle d'accès, d'un décodeur TV « Set-Top-Box », d'un terminal mobile. Dans le contexte d'un réseau domotique, il s'agit également d'équipements d'électroménager, de systèmes d'alarme, de capteurs. La passerelle d'accès permet aux dispositifs du réseau résidentiel d'accéder à un réseau de communication étendu WAN (pour « Wide Area Network »), tel que le réseau Internet.

Ces dispositifs sont par exemple des terminaux mobiles, tels que des terminaux intelligents (« smartphone » en anglais) ou des tablettes. Une fois connectés à un point d'accès, ils peuvent ainsi recevoir des données en provenance des autres dispositifs du réseau local ou bien de dispositifs connectés au réseau de communication étendu et envoyer des données à destination d'un dispositif du réseau local ou connecté au réseau de communication étendu.

De plus en plus d'objets connectés, tels que des bracelets, des montres, des pèse-personnes, des capteurs météo, sont également proposés au public. Ces objets connectés permettent par exemple de collecter des données pour un utilisateur ou bien pour un environnement. Afin de limiter la consommation énergétique de ces objets connectés, un réseau sans fil basse consommation est utilisé pour transmettre les données collectées à un dispositif doté de capacités de traitement. Il s'agit par exemple d'un réseau d'accès radio de technologie BLE, pour « Bluetooth Low Energy ».

Le protocole mis en œuvre dans un réseau d'accès BLE fonctionne en 2 phases :
- une phase d'annonce où un dispositif BLE de type « périphérique », par exemple l'objet connecté, annonce régulièrement sa présence sur le réseau d'accès BLE par l'intermédiaire d'une trame « LE Advertising Report » qui comprend notamment son adresse MAC BLE, son nom et un niveau de puissance d'un signal radio reçu RSSI (pour « Received Signal Strength Indication ») ;
- une phase de connexion GATT (pour « Generic Attribute Profile ») où un dispositif BLE de type « central » se connecte au dispositif périphérique pour collecter des informations plus détaillées telles que le nom du fabricant, le niveau de la batterie.

Ces objets connectés sont ainsi détectés par un dispositif BLE « central » ou maître. Ce dernier peut se connecter aux objets connectés pour collecter leurs données (fréquence cardiaque, nombre de pas effectués, ...). Ensuite, le dispositif BLE maître peut éventuellement transmettre ces informations par l'intermédiaire du réseau Internet vers des serveurs ou bien des zones de stockage. Ce dispositif maître BLE est par exemple un terminal ou téléphone intelligent.

La portée radio pour ce type de réseau d'accès est très limitée, de l'ordre de dix mètres par exemple à l'intérieur d'une habitation. Le dispositif BLE maître doit ainsi se situer à proximité du dispositif BLE « périphérique ». Dans le cas contraire, le dispositif BLE périphérique, bien que présent géographiquement dans le réseau local, n'est pas accessible par le dispositif BLE maître, et ses données ne peuvent pas être collectées ni exploitées par ce dernier.

La publication brevet EP1742153 illustre un système dans lequel un premier dispositif relais UPnP détecte un dispositif connecté à un premier réseau et envoie des informations relatives à ce dispositif détecté à un deuxième dispositif relais UPnP. Ce dernier transmet en fonction des informations reçues un message indiquant que le dispositif détecté est disponible à partir d'un deuxième réseau.

Un des buts de l'invention est de remédier à des insuffisances/inconvénients de l'état de la technique et/ou d'y apporter des améliorations.

Selon un premier aspect, l'invention a pour objet un procédé d'accès par un dispositif maître à une valeur prise par une caractéristique gérée par un dispositif périphérique dans un réseau local, lesdits dispositifs maître et périphérique étant aptes à communiquer par une connexion radio. Le procédé comprend les étapes suivantes mises en œuvre par un premier dispositif relais se trouvant dans une zone de couverture radio du dispositif maître :
- réception d'une commande de simulation du dispositif périphérique en provenance d'un dispositif du réseau local, ledit dispositif périphérique se trouvant dans une zone de couverture radio d'un deuxième dispositif relais ;
- établissement d'une connexion radio avec le dispositif maître, le premier dispositif relais simulant la présence du dispositif périphérique dans la zone de couverture radio du dispositif maître ;
- réception en provenance du dispositif maître et au moyen de la connexion radio d'une demande de lecture d'une valeur prise par une caractéristique gérée par le dispositif périphérique ;
- réception de ladite valeur en provenance du deuxième dispositif relais, ledit deuxième dispositif relais l'ayant obtenue par interrogation du dispositif périphérique, et
- envoi au dispositif maître de ladite valeur au moyen de la connexion radio.

Un dispositif périphérique est un dispositif simple, ne disposant que d'un module d'accès radio basse consommation pour communiquer. La technologie d'accès radio est par exemple conforme à la technologie « Bluetooth Low Energy ». Le dispositif périphérique est par exemple un capteur et n'est interrogeable qu'à partir d'un dispositif maître situé dans son voisinage. Grâce à la mise en œuvre du procédé, tout dispositif maître présent dans une zone de service du réseau local peut obtenir une valeur d'une caractéristique que le dispositif périphérique gère ou mesure.

Aucune modification n'est requise au niveau du dispositif périphérique.

Les dispositifs relais sont connectés au réseau local, plus précisément directement ou indirectement à la passerelle d'accès. Il s'agit par exemple de prises électriques avec une connexion Ethernet et/ou par courant porteur PLC (pour « Power Line Carrier ») et un module d'accès radio de même technologie que le dispositif périphérique.

Les différents modes ou caractéristiques de réalisation mentionnés ci-après peuvent être ajoutés indépendamment ou en combinaison les uns avec les autres, aux étapes du procédé d'accès tel que défini précédemment.

Dans un mode de réalisation particulier, le premier dispositif relais reçoit un identifiant de la caractéristique obtenu par le deuxième dispositif relais auprès du dispositif périphérique et le transmet au dispositif maitre au moyen de la connexion radio.

Une fois la connexion établie, le dispositif maître peut obtenir le profil des caractéristiques gérées par le dispositif périphérique et sélectionner une d'entre elles. Le dispositif maître peut alors le mémoriser pour des interactions ultérieures avec le dispositif périphérique. Dans un autre mode de réalisation, le dispositif maître l'obtient à chaque établissement de connexion. Il n'est ainsi pas nécessaire que le dispositif maître mémorise ce profil.

Dans un mode de réalisation particulier, le procédé comprend en outre une réception d'un identifiant du dispositif périphérique et pour établir une connexion radio, le premier dispositif relais annonce la présence du dispositif périphérique dans la zone de couverture radio du dispositif maître.

Dans un mode de réalisation particulier, le procédé comprend, pour le deuxième dispositif relais, une écoute de fréquences radio pour détecter la présence du dispositif périphérique et une annonce de la présence du dispositif périphérique.

Ainsi, il est possible de détecter la présence dans la zone de service du réseau local du dispositif périphérique.

Dans un mode de réalisation particulier, le premier dispositif relais annonce une présence d'une pluralité de dispositifs périphériques détectés dans une zone de service d'un réseau local.

La présence de tous les dispositifs périphériques peut être annoncée dans le réseau local, le dispositif maître sélectionnant alors le dispositif périphérique auquel il veut accéder. Ceci permet de piloter l'exécution du procédé à partir d'un terminal utilisateur.

Dans un mode de réalisation particulier, les premier et deuxième dispositifs relais communiquant par l'intermédiaire d'une passerelle d'accès d'un réseau local, le procédé comprend en outre une commande d'écoute de fréquences à un des dispositifs relais, afin de détecter une présence du dispositif périphérique dans une zone de service du réseau local.

La passerelle d'accès, du fait de son rôle central dans le réseau local, peut piloter l'exécution du procédé, en commandant les phases d'écoute de fréquences. Ceci permet de limiter la consommation énergétique des dispositifs relais.

Selon un deuxième aspect, l'invention concerne également un premier dispositif relais dans un réseau local, ledit premier dispositif relais se trouvant dans une zone de couverture radio d'un dispositif maître et comprenant :
- un module d'émission et de réception, agencé pour recevoir une commande de simulation du dispositif périphérique en provenance d'un dispositif du réseau local, ledit dispositif périphérique se trouvant dans une zone de couverture radio d'un deuxième dispositif relais (24), et pour recevoir une valeur prise par une caractéristique gérée par le dispositif périphérique en provenance du deuxième dispositif relais, ledit deuxième dispositif relais l'ayant obtenue par interrogation du dispositif périphérique ;
- un module d'accès radio, agencé pour établir une connexion radio avec le dispositif maître en simulant la présence du dispositif périphérique dans la zone de couverture radio du dispositif maître, pour recevoir en provenance du dispositif maître et au moyen de la connexion radio une demande de lecture d'une valeur prise par la caractéristique et pour envoyer la valeur en retour.

Les avantages énoncés pour le procédé d'accès selon le premier aspect sont transposables directement au dispositif relais.

Selon un troisième aspect, l'invention concerne également un système dans un réseau local, ledit système comprenant un premier dispositif relais selon le deuxième aspect et un deuxième dispositif relais, ledit deuxième dispositif relais comprenant :
- un module d'accès radio, agencé pour obtenir une valeur prise par la caractéristique ;
- un module d'émission et de réception, agencé pour recevoir une demande de lecture d'une valeur prise par la caractéristique en provenance du premier dispositif relais et pour lui envoyer la valeur.

Les avantages énoncés pour le procédé d'accès selon le premier aspect sont transposables directement au système.

Dans un mode de réalisation particulier, les modules d'émission et de réception des dispositifs relais communiquent au moyen de courants électriques porteurs.

Dans un mode de réalisation particulier, le système comprend en outre une passerelle d'accès, jouant un rôle d'intermédiaire entre les deux dispositifs relais.

Selon un quatrième aspect, l'invention concerne un programme pour un dispositif relais, comprenant des instructions de code de programme destinées à commander l'exécution des étapes du procédé d'accès selon le premier aspect, lorsque ce programme est exécuté par le dispositif relais et un support d'enregistrement lisible par un dispositif relais sur lequel est enregistré un programme pour un dispositif.

Les avantages énoncés pour le procédé d'accès selon le premier aspect sont transposables directement au programme pour un dispositif relais et au support d'enregistrement. La demande de brevet européen EP 1742153 illustre un dispositif maître capable d'accéder à une valeur prise par une caractéristique gérée par un dispositif périphérique par l'intermédiaire d'un premier et d'un deuxième dispositifs relais - en utilisant des messages du protocole SSDP.

L'invention sera mieux comprise à l'aide de la description suivante de modes de réalisation particuliers de la technique d'accès à une donnée, correspondant à une valeur prise par une caractéristique, en référence aux dessins annexés sur lesquels :
- la figure 1 représente un environnement dans lequel est mise en œuvre la technique d'accès à une donnée ;
- la figure 2a illustre des étapes d'un procédé d'accès à une donnée selon un mode particulier de réalisation ;
- la figure 2b illustre d'autres étapes du procédé d'accès selon un mode particulier de réalisation ;
- la figure 2c illustre d'autres étapes du procédé d'accès selon un mode particulier de réalisation ;
- la figure 3 représente un dispositif relais selon un mode particulier de réalisation ;
- la figure 4 représente une passerelle d'accès selon un mode particulier de réalisation.

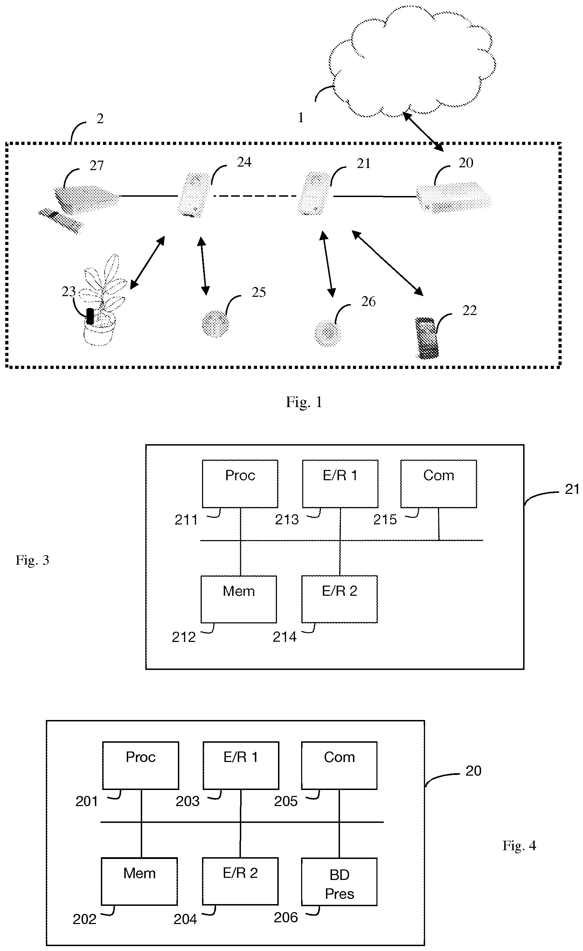

La figure 1 représente, dans son environnement, un réseau de communication local 2, privé ou résidentiel. Une passerelle d'accès 20 permet à des dispositifs du réseau local 2 d'accéder à un réseau de communication étendu 1 ou WAN (pour « Wide Area Network »), tel que le réseau Internet.

Le réseau local s'appuie sur diverses technologies réseau, telles qu'un réseau filaire de type Ethernet selon la norme IEEE 802.3, un réseau sans fil de type Wi-Fi selon la norme IEEE 802.11 ou bien encore un réseau par courant porteur en ligne PLC (par exemple HomePlug ^{®}, Alliance HD-PLC) selon la norme IEEE 1901, ou bien encore un réseau pour câble coaxial de type MoCA^{®}, pour « Multimédia over Coax ».

Les dispositifs du réseau local 2 peuvent être n'importe quels dispositifs, par exemple domestiques, disposant d'une connexion réseau filaire ou sans-fil. Il peut s'agir par exemple d'un terminal ou téléphone mobile 22, de prises PLC 21, 24, d'un décodeur TV 27 (« Set-Top Box »), d'une console de jeux (non représentée).

Tel que représenté sur la figure 1, la passerelle 20 est connectée par une liaison filaire Ethernet selon la norme IEEE 802.3 à la prise PLC 21. Cette dernière communique avec la prise PLC 24 au moyen d'une technologie utilisant les courants porteurs. Cette technologie est par exemple conforme à la spécification IEEE 1901-2010, intitulée «IEEE Std 1901-2010, IEEE Standard for Broadband over Power Line Networks: Medium Access Control and Physical Layer Spécifications ». Au niveau réseau, les échanges entre la passerelle d'accès 20 et les prises PLC 21, 24 sont conformes au protocole réseau UPnP, pour « Universal Plug and Play », promulgué par le forum UPnP. La norme UPnP a pour but de permettre à des dispositifs de se connecter aisément et de communiquer simplement au sein d'un tel réseau. Elle constitue un ensemble de protocoles de communication basés sur le protocole IP (Internet Protocol, protocole de base pour les réseaux de type Internet). Pour contrôler les dispositifs du réseau, le protocole UPnP utilise des points de contrôle. Dans le mode de réalisation décrit, la passerelle d'accès 20 est un point de contrôle du réseau local. Un point de contrôle émet classiquement vers les différents dispositifs du réseau local des messages dits de découverte afin d'obtenir en retour une description des dispositifs correspondant à la requête. Ces messages de découverte sont émis le plus souvent en mode de communication point vers multipoint, aussi appelé multicast, du point de contrôle vers les dispositifs. Un dispositif terminal compatible avec la norme UPnP répond à ces messages de requête, et émet de surcroît, à fréquence régulière, des messages de présence pour signifier qu'il est actif et connecté sur le réseau.

Le décodeur TV 27 est quant à lui connecté à la prise PLC 24 par une liaison filaire Ethernet et accède ainsi au réseau local. Les dispositifs du réseau local une fois connectés peuvent accéder au réseau de communication étendu 1 par l'intermédiaire de la passerelle d'accès 20.

Une zone de service du réseau local correspond à une zone géographique dans laquelle les dispositifs du réseau local peuvent communiquer directement ou indirectement avec la passerelle d'accès 20. Cette zone de service correspond par exemple à un immeuble d'habitation d'un utilisateur. Des prises PLC sont disposés par exemple dans chaque pièce de l'habitation.

Dans la zone de service du réseau local, d'autres dispositifs, dits dispositifs périphériques, sont également présents. Il s'agit par exemple d'un détecteur de fumée 25, de dispositifs électroménagers (non représentés), d'un capteur 26, d'un capteur pour plantes 23. Ces différents dispositifs périphériques sont agencés pour communiquer sur un réseau d'accès radio et comprennent chacun un module d'accès radio.

Le module d'accès radio est de type radio basse consommation selon une technologie d'accès, telle que Bluetooth ^{®} Low Energy BLE. Cette technologie d'accès BLE est définie par un groupe de normalisation Bluetooth SIG sous la forme d'un ensemble de documents, nommé « Bluetooth Core Spécification 4.1 ».

Dans le mode de réalisation décrit, les prises PLC 21, 24 sont également agencées pour communiquer sur le réseau d'accès radio et comprennent chacune un module d'accès radio de type basse consommation selon la technologie d'accès BLE. Ces prises PLC jouent un rôle de relais vis-à-vis des dispositifs maître et périphérique lors de la mise en œuvre du procédé décrit ultérieurement. Ces prises PLC sont ainsi également appelées dispositifs relais.

Le détecteur de fumée 25 et le capteur pour plantes 23 se trouvent dans une zone de couverture radio de la prise PLC 24. Le capteur 26 et le téléphone mobile 22 se situe dans une zone de couverture radio de la prise PLC 21. La taille de ces zones de couverture dépend de la technologie radio utilisée et de l'environnement. Pour une technologie BLE, ces zones de couverture sont de l'ordre d'une dizaine de mètres. Le capteur pour plantes 23 est positionné dans la terre d'une plante et permet de mesurer différentes caractéristiques telles qu'un taux d'engrais, un taux d'humidité du sol, une température et une luminosité, en temps réel. Une application s'exécutant sur le téléphone mobile 22 permet de collecter les valeurs de ces différentes caractéristiques lorsque le téléphone mobile 22 se trouve à proximité du capteur pour plantes 23. Le téléphone mobile 22 joue ainsi le rôle du dispositif maître et le capteur pour plantes 23 celui du dispositif périphérique. Du fait de la technologie radio de type BLE, la distance maximum entre dispositifs maître et périphérique est de l'ordre de dix mètres.

La passerelle d'accès 20 peut également disposer d'un module d'accès radio de type Wi-Fi. Elle offre alors un accès au réseau de communication étendu 1 à des dispositifs situés dans une zone de couverture radio (non représentés sur la figure 1). La passerelle d'accès 20 communique ainsi avec des dispositifs qui sont localisés dans sa zone de couverture radio par l'intermédiaire d'une connexion sans fil, par exemple avec le téléphone mobile 22.

On rappelle ici que le réseau local représenté sur la figure 1 correspond à un exemple de réalisation. Aucune limitation n'est attachée au nombre de dispositifs relais, de dispositifs maîtres, de dispositifs périphériques, ni aux types de ces dispositifs.

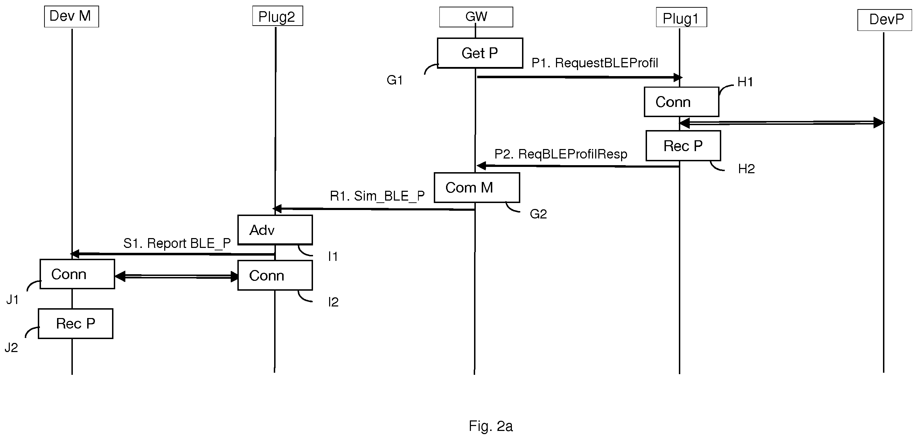

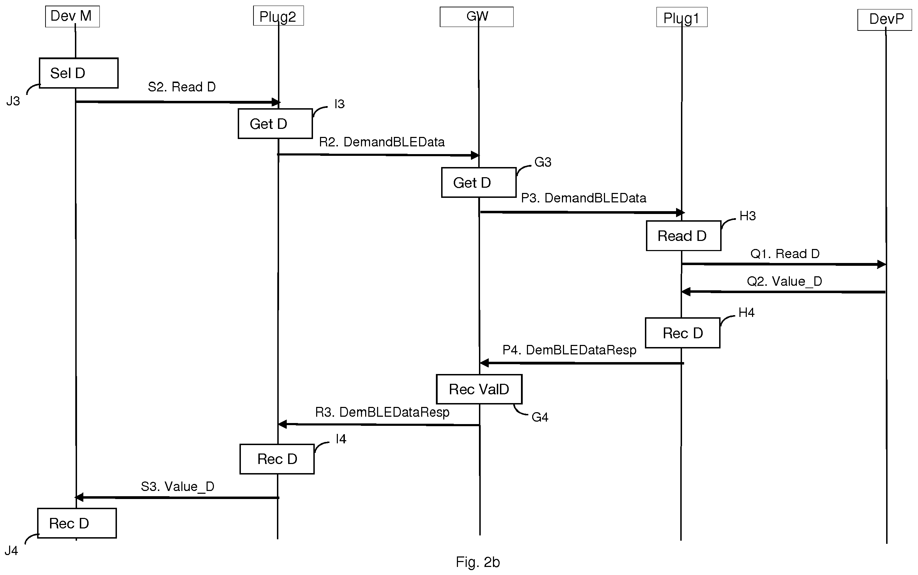

Nous allons maintenant décrire, en relation avec les figures 2a et 2b, la technique de d'accès à une donnée, correspondant à une valeur prise par une caractéristique, dans une zone de service d'un réseau local dans des modes particuliers de réalisation, mise en œuvre par les dispositifs relais 21, 24 en collaboration avec la passerelle d'accès 20. Les étapes sont décrites par la suite pour la prise PLC 21 en tant que dispositif relais en relation avec le dispositif maître (i.e. le téléphone mobile 22) et pour la prise PLC 24 en tant que dispositif relais en relation avec le dispositif périphérique (i.e. le capteur pour plantes 23). Dans le mode de réalisation décrit, la passerelle d'accès 20 joue un rôle d'intermédiaire entre les deux dispositifs relais et comprend une base de données de présence, agencée pour mémoriser le ou les dispositifs périphériques présents dans la zone de service du réseau local. Pour un dispositif périphérique présent dans la zone de service, la base de données comprend le nom du dispositif périphérique (« Local Name »), une adresse, par exemple l'adresse MAC, et un identifiant du dispositif relais permettant de le joindre. Le nom du dispositif périphérique « Local Name » peut prendre les valeurs « Shortened Local Name » et « Complete Local Name ». Il permet d'identifier simplement le dispositif périphérique. L'identifiant du dispositif relais correspond par exemple à un identifiant universel unique UUID (pour « Universally Unique Identifier »).

On se place par la suite dans l'hypothèse où le dispositif périphérique 23 a annoncé sa présence et la base de données comprend les données relatives à sa présence.

Les messages échangés entre le dispositif relais 24 et le dispositif périphérique 23 et entre le dispositif relais 21 et le dispositif maître 22 sont conformes au protocole BLE.

Les messages échangés entre la passerelle d'accès 20 et les dispositifs relais 21, 24 sont conformes au protocole UPnP. Ces différents dispositifs mettent en œuvre un service de découverte BLE appelé « urn:scllemas-upnp-org:service:blediscovery:l ». Le protocole SSDP permet de découvrir des services offerts sur un réseau, tel que le service blediscovery. Le protocole SSDP est défini par l'IETF dans un document draft-cai-ssdp-vl-03.txt « Simple Service Discovery Protocol/1.0 Operating without an Arbiter » d'octobre 1999. Le dispositif relais 21 annonce sa présence sur le réseau local en diffusant un message de notification protocolaire SSDP NOTIFY « ssdp:alive ». Le dispositif relais 21 annonce qu'il offre le service de découverte blediscovery. L'identifiant du dispositif relais correspond par exemple à un identifiant universel unique UUID (pour « Universally Unique Identifier »). La passerelle d'accès est ainsi informée des services et des dispositifs relais qui sont présents dans le réseau local.

### Exemple de message de notification envoyé par le dispositif relais pour publier la présence du service blediscovery :

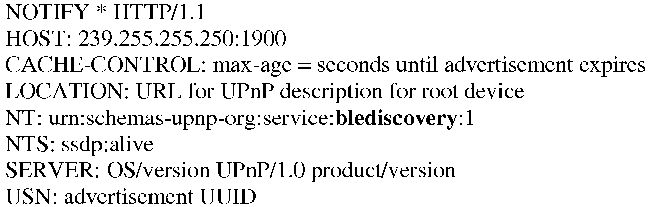

### Exemple de message permettant à la passerelle d'accès de détecter la présence du service blediscovery :

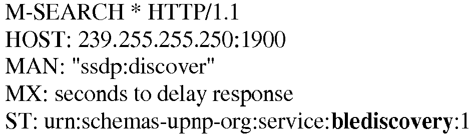

La figure 2a représente des étapes du procédé d'accès dans une phase d'obtention du profil du dispositif périphérique.

Dans une étape G1, la passerelle d'accès 20 envoie une commande P1 RequestBLEProfile au dispositif relais 24, commandant au dispositif relais 24 de se connecter au dispositif périphérique 23 et d'obtenir un profil GATT (« Generic Attribute Profile »). Le dispositif périphérique 23 est identifié par son adresse, par exemple son adresse MAC, mémorisée dans la base de données de présence. On rappelle ici que le profil GATT est organisé hiérarchiquement en sections, appelées services, qui regroupent des données appelées caractéristiques. Une caractéristique peut correspondre par exemple au niveau de batterie, au taux d'humidité, au taux de luminosité, au nombre de pas effectués par un utilisateur, ... Une caractéristique est identifiée par un identifiant universel unique UUID (pour « Universally Unique Identifier »). Une telle demande RequestBLEProfile est par exemple est un message de la couche protocolaire SOAP (pour « Simple Object Access Protocol ») dans un réseau UPnP et fait partie du service de découverte BLE « blediscovery » décrit précédemment. Le protocole SOAP permet dans un réseau UPnP d'invoquer des actions.

### Exemple de message de demande de profil

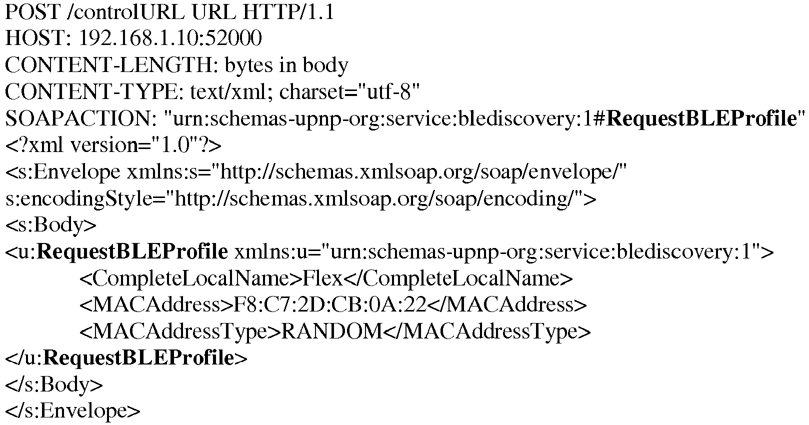

On notera que ces données XML (de l'Anglais « eXtended Markup Language ») ne constituent qu'un exemple de données de description et que l'invention peut également s'appliquer à des données de description conformes à une autre norme, telle que le protocole COAP (pour « Constrained Application Protocol »), le protocole Alljoyn défini par l'Alliance Allseen.

Cette commande P1 est reçue par le dispositif relais 24 dans une étape H1. Le dispositif relais 24 établit alors une connexion avec le dispositif périphérique 23 identifié selon le mécanisme défini par Bluetooth LE. Cette connexion est symbolisée sur la figure 2a par une double flèche entre le dispositif relais 24 et le dispositif périphérique 23. Puis dans une étape H2, le dispositif relais 24 reçoit le profil GATT du dispositif périphérique 23 et le transfère à la passerelle d'accès 20 dans un message de réponse P2 RequestBLEProfileResponse.

Le profil GATT est reçu par la passerelle d'accès 20 dans une étape G2. Une telle réponse RequestBLEProfileResponse est par exemple conforme au protocole UPnP et fait partie du service de commande d'écoute « blediscovery » décrit précédemment.

### Exemple de message de réponse pour un capteur de plantes

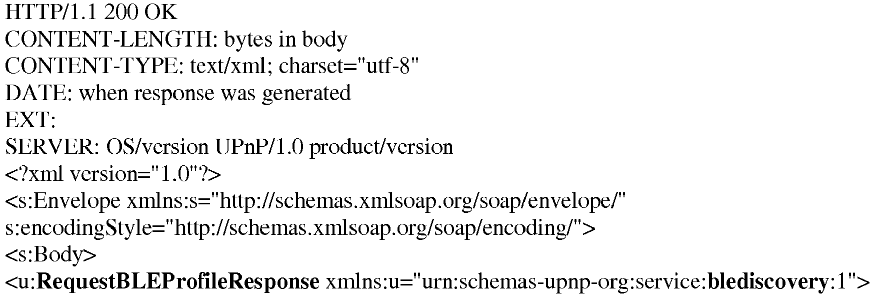

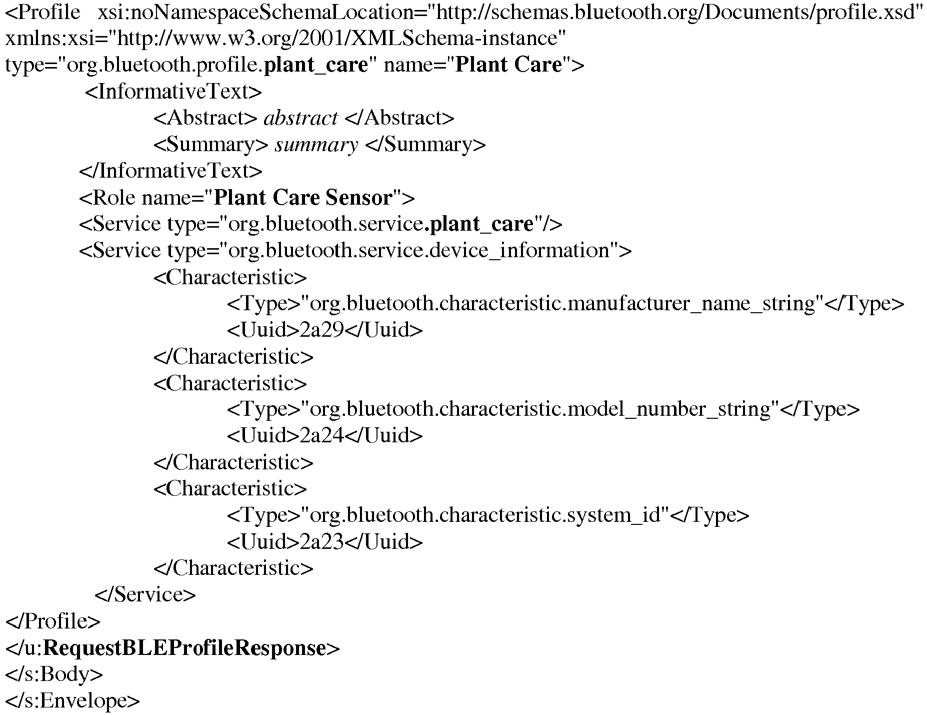

Toujours dans cette étape G2, la passerelle d'accès 20 envoie au dispositif relais 21 un message R1 de commande de simulation de la présence du dispositif périphérique 23. Une telle commande de simulation comprend notamment le nom du dispositif périphérique 23, l'adresse MAC et le profil GATT du dispositif périphérique 23.

Ce message R1 de commande est reçu par le dispositif relais 21 dans une étape I1. Toujours dans cette étape I1, le dispositif relais 21 se signale auprès du dispositif maître 22 et transmet un message S1-Report sur une des fréquences dédiées à l'écoute de fréquences. Cette écoute de fréquences est généralement connue sous le terme de « scan » et permet de détecter la présence de dispositifs périphériques. Ce message SI correspond à un message d'annonce « LE Advertising Report », défini également dans ce document de spécifications Bluetooth. Le dispositif relais 21 simulant le dispositif périphérique 23, le message SI comprend le nom du dispositif périphérique 23, l'adresse MAC du dispositif périphérique 23 et une donnée représentative d'un signal radio RSSI, pour « Received Signal Strength Indication ». Lorsque l'écoute de fréquence est active, ce message SI comprend un élément « Event_Type » égal à « Scan Response ». Dans le cas contraire (écoute passive), ce message SI comprend un élément « Event_Type » égal à « connectable (undirected/directed) advertising ».

Ce message d'annonce SI est reçue par le dispositif maître 22 dans une étape J1. Le dispositif maître 22 établit alors une connexion avec le dispositif relais 21 (simulant le dispositif périphérique 23) selon le mécanisme défini par Bluetooth LE. Cette connexion est symbolisée sur la figure 2a par une double flèche entre le dispositif relais 21 et le dispositif maître 22. Puis dans une étape I2, le dispositif relais 21 envoie au dispositif maître 22 le profil GATT du dispositif périphérique 23. Le profil GATT est reçu par le dispositif maître 22 dans une étape J2.

Dans un mode de réalisation particulier, ces échanges relatifs au profil GATT ne sont pas mis en œuvre, le dispositif maître disposant déjà de ce dernier (par exemple parce qu'il l'a reçu lors d'une précédente connexion). La commande de simulation R1 comprend alors uniquement le nom du dispositif périphérique 23 et son adresse MAC.

La figure 2b représente des étapes du procédé d'accès dans une phase d'obtention d'une valeur prise par une caractéristique gérée par le dispositif périphérique.

Dans une étape J3, une caractéristique est sélectionnée à partir du profil GATT reçu ou mémorisé. Cette sélection est par exemple configurée en fonction du type de dispositif périphérique. Elle peut également être effectuée par une application s'exécutant sur le dispositif maître 22.

Une demande de lecture S2 (« READ ») de la caractéristique sélectionnée est alors envoyée par le dispositif maître 22 au dispositif relais 21.

Dans une étape I3, le dispositif relais 21 reçoit la demande de lecture S2 DemandBLEData et transmet à la passerelle d'accès 20 un message de lecture R2 de la caractéristique sélectionnée identifiée par son identifiant universel unique. Une telle demande DemandBLEData est par exemple conforme au protocole UPnP et fait partie du service de découverte BLE « blediscovery » décrit précédemment.

### Exemple de message de demande de caractéristique (Niveau de batterie)

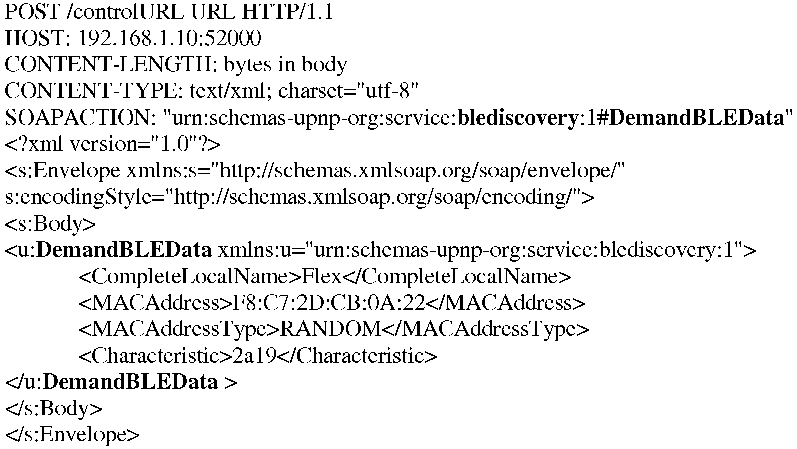

Dans une étape G3, une commande P3 DemandBLEData est alors envoyée de la passerelle d'accès 20 au dispositif relais 24, commandant à ce dernier d'obtenir une valeur de la caractéristique sélectionnée.

Cette commande P3 est reçue par le dispositif relais 24 dans une étape H3. Le dispositif relais 24 envoie alors une demande de lecture Q1 (« READ ») de la valeur de cette caractéristique.

Au cours d'une étape H4, le dispositif relais 24 reçoit dans un message Q2 cette valeur et la transfère à la passerelle d'accès 20 dans un message P4 DemandBLEDataResponse.

Le message P4 est reçu par la passerelle d'accès 20 dans une étape G4 et un message R3 DemandBLEDataResponse correspondant est envoyé par la passerelle d'accès 20 au dispositif relais 21.

Dans une étape I4, le dispositif relais 21 (simulant le dispositif périphérique 23) répond à la demande de lecture reçue à l'étape I3 en envoyant la valeur de la caractéristique requise.

Ainsi, le dispositif maître 22 peut obtenir une valeur prise par une caractéristique mesurée ou gérée par le dispositif périphérique 23, quelles que soient leurs localisations respectives dans la zone de service du réseau local.

Lorsque le dispositif maître 22 n'a plus de demande de lecture à transmettre, les différentes connexions établies peuvent être relâchées afin de limiter la consommation énergétique des dispositifs.

Le séquencement des différentes étapes décrites précédemment peut être différent dans d'autres modes de réalisation. Le dispositif relais 21 peut par exemple simuler la présence de plusieurs dispositifs périphériques détectés par le dispositif relais 24. Les étapes H1 et H2 sont alors exécutées lorsque le dispositif maître 22 initie une connexion avec le dispositif relais 21, ce dernier jouant le rôle d'un des dispositifs périphériques.

Les étapes du procédé d'accès ont été décrites pour un mode de réalisation dans lequel la passerelle d'accès 20 joue un rôle d'intermédiaire entre les dispositifs relais, disposés dans la zone de service du réseau local. A ce titre, la passerelle d'accès 20 comprend une base de données de présence, agencée pour mémoriser le ou les dispositifs périphériques présents dans la zone de service du réseau local.

Dans un autre mode de réalisation, les dispositifs relais dialoguent directement entre eux sans intermédiaire. La base de données de présence est alors distribuée entre les différents dispositifs relais, chacun d'entre eux obtenant les données de présence des dispositifs périphériques localisés dans sa zone d'interaction. Un dispositif relais peut alors simuler la présence de l'ensemble des dispositifs périphériques détectés par un autre dispositif relais.

Les étapes décrites précédemment reposent sur la mise en œuvre d'un protocole entre un dispositif du réseau local (la passerelle d'accès ou bien une prise PLC) mettant en œuvre le protocole IP et la prise PLC mettant en œuvre également en œuvre le protocole IP et le protocole BLE. Le protocole défini permet notamment par l'intermédiaire de l'interface IP :
- de commander un dispositif relais afin qu'il établisse une connexion avec un dispositif périphérique BLE pour obtenir dans un premier temps un profil GATT, et dans un deuxième temps une valeur prise par une caractéristique ;
- au dispositif relais de transmettre des données reçues par le protocole BLE ;
- de demander à un dispositif relais de simuler la présence du dispositif périphérique BLE afin de publier des données reçues en BLE depuis ce dispositif périphérique.

Dans le mode de réalisation décrit, les modules d'accès radio des dispositifs relais sont dans un état d'activation « activé », c'est-à-dire en service. Dans le contexte des économies d'énergie, le forum UPnP a défini le profil dit « Energy Management » dans la spécification « EnergyManagement for UPnP 1.0 » du 30 août 2013 qui permet aux dispositifs de publier la liste de leurs interfaces réseaux (nom, description, adresse physique, adresse réseau, type, etc.) et en particulier le statut des interfaces (active, désactivée sans réveil automatique, désactivée avec réveil périodique, etc.) et la méthode de réveil à utiliser pour les sortir d'un état de veille. Dans un autre mode de réalisation particulier, les modules d'accès radio des prises PLC 21, 24 sont activables et désactivables à distance par la passerelle d'accès 20. Un état d'activation est associé à chaque module d'accès radio et peut prendre une valeur « activé » ou « désactivé ». L'état d'activation du module est « désactivé » suite à un passage dans un état de veille ou bien à une mise hors tension du module.

Un exemple d'une table de description d'un ou plusieurs dispositifs du réseau et de leurs interfaces est fourni ci-dessous dans le contexte de la norme UPnP « Energy Management » ; on représente en syntaxe de description XML la prise PLC, en supposant qu'elle dispose d'une interface Bluetooth LE.

### Exemple de description d'une prise PLC:

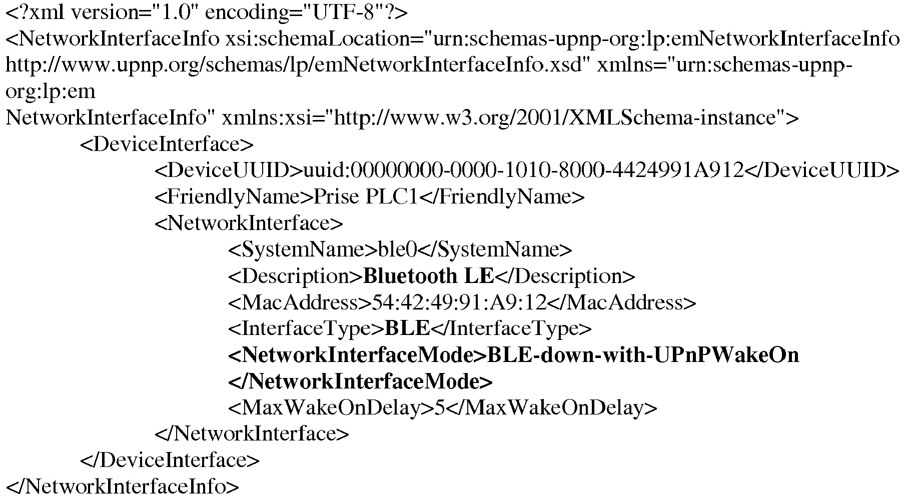

Ce fichier d'exemple comprend une liste d'une interface (*DeviceInterface*), décrite entre une balise ouvrante <NetworkInterface > et une balise fermante </ NetworkInterface>.

L'interface est de type Bluetooth LE (<Description>Bluetooth LE</Description>). Elle est inactive et activable par un nouveau message UPnP appelé « BLE-down-with-UPnPWakeOn ». Cette interface est réveillée lors de la réception d'un message « X_WakeOn » sur l'interface IP.

La syntaxe XML du fichier représentatif des interfaces de la prise est globalement conforme à la spécification UPnP « Energy Management » mentionnée auparavant, sauf pour ce qui concerne les deux éléments suivants :
- la balise « InterfaceType » permet de spécifier une interface à basse consommation, dans notre exemple de type Bluetooth LE ;
- la balise « NetworklnterfaceMode » permet de spécifier qu'une interface est désactivable (« BLE-up-with-UPnPStandby ») par un nouveau message UPnP appelé « X_Standby », dont une syntaxe possible est proposée ci-dessous, ou activable (« BLE-down-with-UPnPWakeOn ») via le message « X_WakeOn ».

### Exemple de syntaxe pour le message X Standby :

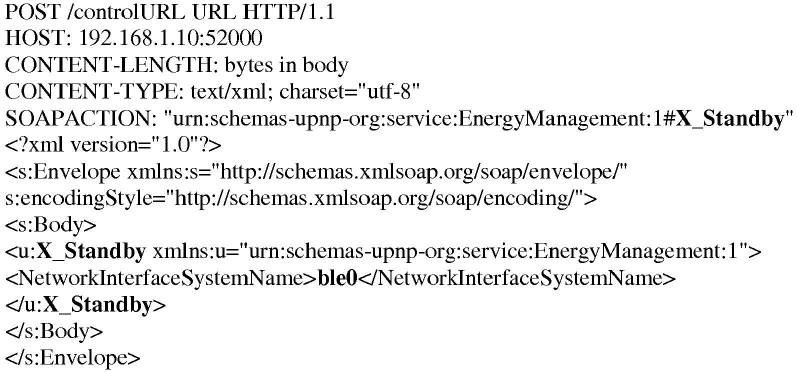

### Exemple de syntaxe pour le message X WakeOn :

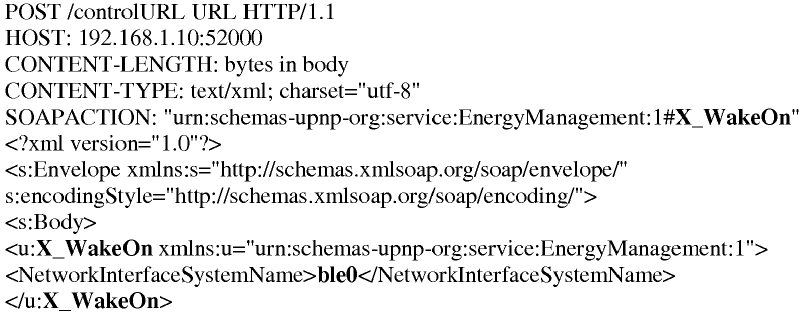

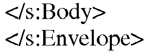

Les différents modes de réalisation ont été décrits à l'aide de mécanismes et protocole UPnP. Aucune limitation n'est attachée à l'utilisation du protocole UPnP. Les différents modes de réalisation peuvent également être mis en œuvre avec un protocole orienté binaire ou bien encore avec le protocole Alljoyn. Le protocole orienté binaire est un protocole de communication qui transmet les flux de données comme un ensemble de bits sans sémantique et s'appuie sur une messagerie définie entre deux dispositifs, un message comprenant un type de message et des paramètres. Ceci présente l'avantage de limiter la bande passante nécessaire à la mise en œuvre du procédé entre deux dispositifs.

A titre illustratif, un cas d'usage est décrit. Romain a un capteur pour plantes planté dans la terre de son orchidée. Ce capteur contient des capteurs de température, d'humidité et de luminosité pour les plantes. Les données collectées par ces capteurs sont ensuite envoyées à un téléphone ou terminal mobile au moyen de la technologie BLE, lorsqu'il se situe dans une zone d'interaction, de l'ordre de dix mètres.

Romain dispose aussi chez lui de prises PLC qu'il a placées au Rez-de-Chaussée dans son salon (PLC1) et à l'étage dans son bureau (PLC2). Romain a placé l'orchidée dehors à proximité du salon afin de profiter d'un changement de météo annoncé. Après une bonne averse, Romain souhaite consulter le taux d'humidité collecté par le capteur afin de décider de rentrer l'orchidée.

Grâce à la coopération entre les prises PLC, la prise PLC1 obtient du capteur pour plantes le taux d'humidité et le transmet à la prise PLC2. Cette dernière simule le capteur pour plantes auprès du terminal mobile. Romain sait alors s'il doit descendre rentrer sa plante ou non.

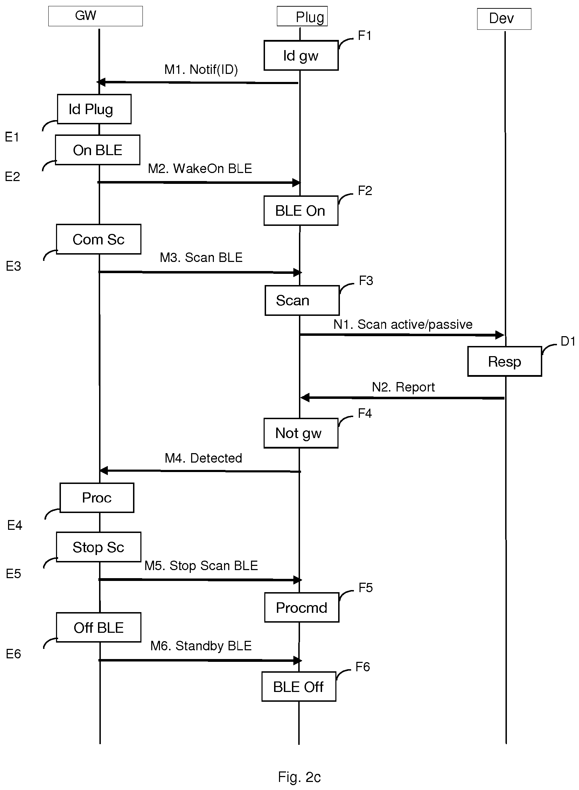

La figure 2c représente des étapes mises en œuvre par la passerelle d'accès 20, les dispositifs relais 21, 24 pour déterminer une présence d'un dispositif périphérique dans la zone de service du réseau local. Les étapes sont décrites par la suite pour la prise PLC 21 en tant que dispositif relais. Il est bien entendu que ces étapes sont également mises en œuvre pour la prise PLC 24.

A l'état initial, le module d'accès radio du dispositif relais 21 est dans un état d'activation « désactivé », c'est-à-dire éteint ou mis en veille.

Dans une étape F1, le dispositif relais 21 annonce sa présence sur le réseau local en diffusant un message de notification M1-Notif. Le message M1-Notif comprend un identifiant du dispositif relais. Le message M1 correspond par exemple à un message protocolaire SSDP (pour « Simple Service Discovery Protocol ») NOTIFY « ssdp:alive ». Le dispositif relais 21 annonce qu'il offre un service de gestion de l'énergie « urn:schemas-upnp-org:service:EnergyManagement:1 ». L'identifiant du dispositif relais correspond par exemple à un identifiant universel unique UUID (pour « Universally Unique Identifier »).

### Exemple de message de notification envoyé par le dispositif relais pour publier la présence du service EnergyManagement :

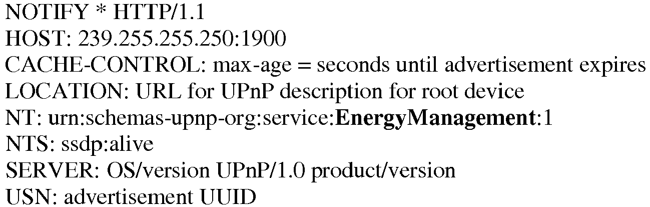

Dans une étape E1, la passerelle d'accès 20 reçoit le message de notification NI en provenance du dispositif relais 21. La passerelle d'accès 20 est ainsi informée des services et des dispositifs relais qui sont présents dans le réseau local.

Dans une étape E2, la passerelle d'accès 20 commande une activation du module d'accès radio BLE du dispositif relais 21, c'est-à-dire une mise en service. Cette mise en service peut correspondre à une sortie d'un état de veille ou bien à une mise sous tension du module. L'état d'activation du module est alors « activé ». Cette commande est effectuée par l'envoi d'un message M2-WakeOn BLE. Le message M2 correspond par exemple au message X_WakeOn défini précédemment dans un contexte UPnP Energy Management.

Ce message de commande M2 est reçu par le dispositif relais 21 dans une étape F2 et ce dernier active alors son module d'accès radio BLE.

Dans une étape E3, la passerelle d'accès 20 commande le dispositif relais 21 pour que ce dernier exécute une écoute de fréquences d'accès au réseau d'accès radio BLE. Un message de commande M3- Scan BLE est transmis par la passerelle d'accès 20 au dispositif relais 21. Le message M3 correspond par exemple à un message UPnP X_StartBLEScan.

### Exemple de syntaxe pour le message X StartBLEScan :

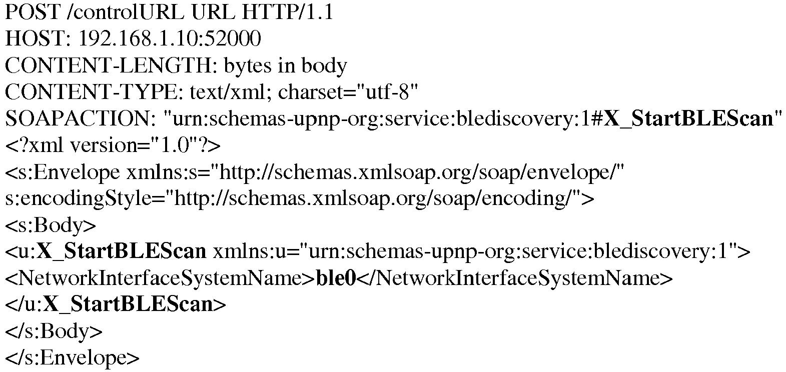

Dans un mode de réalisation particulier, le message M3 comprend un premier paramètre dl indiquant une durée pendant laquelle cette écoute de fréquences doit être effectuée. Dans un mode de réalisation particulier alternatif ou cumulatif au mode de réalisation précédent, le message M3 comprend un deuxième paramètre temporel d2 indiquant à quelle fréquence cette écoute de fréquences doit être effectuée. Ainsi, la passerelle d'accès 20 peut commander une écoute de fréquences de dl secondes toutes les d2 secondes.

La passerelle d'accès 20 peut ainsi contrôler les écoutes de fréquences BLE mises en œuvre par le dispositif relais 21. Ceci permet de limiter la consommation énergétique du dispositif relais 21. Cette commande d'écoute de fréquences E3 peut être déclenchée de manière régulière par la passerelle d'accès 20. Elle peut également être déclenchée suite à la réception d'une requête d'obtention d'une donnée de présence relative à un dispositif périphérique.

Dans une étape F3, le dispositif relais 21 reçoit le message de commande M3 et le cas échéant les paramètres temporels associés et démarre une écoute de fréquences BLE. Cette écoute de fréquences peut être active, avec un envoi d'un message NI sollicitant les dispositifs périphériques afin que ces derniers se signalent (« LE Set Scan Enable Command » défini dans le document de spécifications « BLUETOOTH SPECIFICATION Version 4.1 »), ou passive.

Dans une étape Dl, le dispositif périphérique 23 détecte qu'il doit se signaler auprès du dispositif relais et transmet un message N2-Report sur une des fréquences dédiées à cette écoute. Ce message N2 correspond à un message d'annonce « LE Advertising Report », comprenant notamment le nom du dispositif périphérique (« Local Name »), une adresse, par exemple l'adresse MAC, et une donnée représentative d'un signal radio RSSI, pour « Received Signal Strength Indication ».

Ce message N2 d'annonce est reçu par le dispositif relais 21 dans une étape F4. Toujours dans cette étape F4, suite à la réception du message d'annonce N2, le dispositif relais 21 transmet une notification M4-Detected de détection du dispositif périphérique 23 à la passerelle 20. La notification de détection M4 comprend par exemple le nom du dispositif périphérique détecté et/ou l'adresse du dispositif périphérique détecté. Dans un mode de réalisation particulier, la notification de détection M4 est un message de la couche protocolaire GENA (pour « Generic Event Notification Architecture »). Le protocole GENA défini dans le document de l'IETF « draft-cohen-gena-p-base-01.txt » permet dans un réseau UPnP d'annoncer des événements par un mécanisme de souscription.

### Exemple de notification GENA

```
 NOTIFY delivery path HTTP/1.1
 HOST: delivery host:delivery port
 CONTENT-TYPE: text/xml
 CONTENT-LENGTH: Bytes in body
 NT: upnp:event
 NTS: upnp:propchange
 SID: uuid:subscription-UUID
 SEQ: event key
 <?xml version="1.0"?>
 <e:propertyset xmlns:e="urn:schemas-upnp-org:event-1-0">
 <e:property>
 <CompleteLocalName>Flex</CompleteLocalName>
 <MACAddress>F8:C7:2D:CB:0A:22</MACAddress>
 <MACAddressType>RANDOM</MACAddressType>
 <RSSI>-58</RSSI>
 </e:property>
 </e:propertyset>
```

Dans un autre mode de réalisation particulier, la notification de détection M4 est un message protocolaire Alljoyn.

Cette notification de détection M4 est reçue par la passerelle d'accès 20 dans une étape E4. Le dispositif périphérique 23 est alors identifié comme présent dans la zone de service du réseau local. Cette information de présence du dispositif périphérique 23 est mémorisée dans la base de données de présence.

La passerelle d'accès 20 peut également mémoriser un identifiant du dispositif relais 21 ayant détecté le dispositif périphérique 23.

Dans une étape E5, la passerelle d'accès 20 commande le dispositif relais 21 pour que ce dernier arrête l'exécution de l'écoute de fréquences d'accès au réseau d'accès radio BLE. Un message de commande M5- Stop Scan BLE est transmis par la passerelle d'accès 20 au dispositif relais 21. Le message M5 correspond par exemple à un message UPnP X_StopBLEScan.

### Exemple de syntaxe pour le message X StopBLEScan :

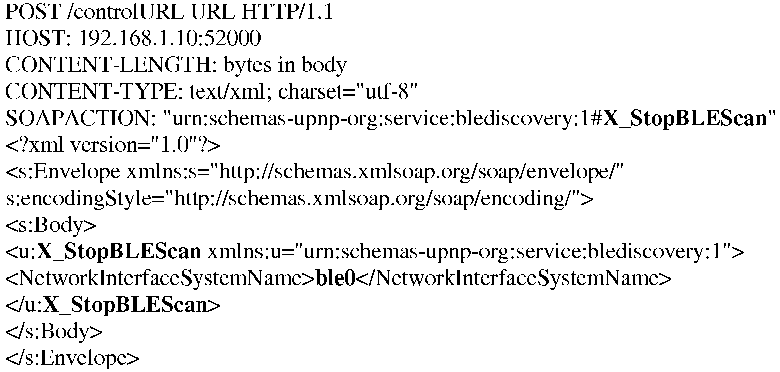

Dans une étape F5, le dispositif relais 21 reçoit le message de commande M5 et arrête l'écoute de fréquences BLE. Ceci permet de limiter la consommation énergétique du dispositif relais 21 ainsi que la consommation sur les dispositifs périphériques qui n'ont plus à répondre à des requêtes de découverte.

Dans une étape E6, la passerelle d'accès 20 commande une désactivation du module d'accès radio BLE du dispositif relais 21, c'est-à-dire une mise hors service. Cette commande est effectuée par l'envoi d'un message M6-Standby BLE. Le message M6 correspond par exemple au message X_Standby défini précédemment dans un contexte UPnP Energy Management.

Ce message de commande M6 est reçu par le dispositif relais 21 dans une étape F6 et ce dernier désactive alors son module d'accès radio BLE. Ceci permet de limiter la consommation énergétique du dispositif relais 21.

Le mode de réalisation a été décrit dans un cas où la présence du dispositif périphérique 23 est détectée à l'étape E4. La réception d'une notification de présence M4 est supervisée par une temporisation. Lorsque cette temporisation expire, la passerelle d'accès 20 met à jour la liste L des dispositifs périphériques présents en ajoutant ceux qui se sont annoncés, en supprimant ceux qui ne se sont pas annoncés, en modifiant leur localisation en cas de changement.

Le mode de réalisation décrit précédemment pour la détection d'une présence comprend différentes étapes permettant d'optimiser la consommation énergétique des dispositifs relais 21, 24. Il est également possible de prévoir d'autres modes n'offrant pas cette optimisation. Dans une première variante, l'étape E5 visant à arrêter l'écoute de fréquences n'est pas mise en œuvre. Le dispositif relais 21 effectue alors en permanence l'écoute de fréquences en fonction des paramètres temporels définis par la passerelle d'accès 20. Dans une deuxième variante, l'étape E6 de désactivation du module d'accès radio BLE n'est pas mise en œuvre. Le réseau d'accès radio BLE existe en permanence au niveau du dispositif relais 21.

Les étapes pour la détection de présence ont été décrites pour un mode de réalisation dans lequel la passerelle d'accès 20 joue un rôle d'intermédiaire entre les dispositifs relais, disposés dans la zone de service du réseau local. A ce titre, la passerelle d'accès 20 comprend une base de données de présence, agencée pour mémoriser le ou les dispositifs périphériques présents dans la zone de service du réseau local. Dans un autre mode de réalisation, les dispositifs relais dialoguent directement entre eux sans intermédiaire, tel que la passerelle d'accès. La base de données de présence est alors distribuée entre les différents dispositifs relais, chacun d'entre eux obtenant les données de présence des dispositifs périphériques localisés dans sa zone d'interaction.

Nous allons maintenant décrire un dispositif relais 21, 24 dans un mode particulier de réalisation en référence à la figure 3. Un tel dispositif relais est agencé pour coopérer avec autre dispositif relais 24 dans une zone de service du réseau local. Il comprend notamment :
- une zone mémoire 212, agencée pour mémoriser un programme qui comprend des instructions de code pour mettre en œuvre les étapes du procédé d'accès, tel que décrit précédemment ;
- un processeur 211 pour exécuter des instructions de code de modules logiciels ;
- un module 213 d'émission/réception, agencé pour communiquer avec un autre dispositif du réseau local ;
- un module 214 d'accès radio ;
- un module 215 de traitement, agencé pour exécuter une commande reçue de l'autre dispositif relais.

Le module 214 d'accès radio est agencé pour communiquer sur un réseau d'accès radio.

Le module 213 d'émission/réception est par exemple un module d'interface Ethernet. Il est notamment agencé pour recevoir une commande de simulation du dispositif périphérique en provenance d'un dispositif du réseau local, le dispositif périphérique se trouvant dans une zone de couverture radio d'un autre dispositif relais 24, et pour recevoir une valeur prise par une caractéristique gérée par le dispositif périphérique en provenance de cet autre dispositif relais, obtenue par interrogation du dispositif périphérique.

Le module 214 d'accès radio est agencé pour établir une connexion radio avec un dispositif maître 22 en simulant la présence du dispositif périphérique 23 dans la zone de couverture radio du dispositif maître, pour recevoir en provenance du dispositif maître et au moyen de la connexion radio une demande de lecture d'une valeur prise par la caractéristique et pour envoyer la valeur en retour.

Il est ici souligné que le dispositif relais 21 peut comprendre également d'autres modules de d'interface, non représentés sur la figure 3.

Dans un mode de réalisation particulier, le module 213 d'émission/réception est en outre agencé pour recevoir une commande d'une activation du module 214 d'accès radio du dispositif relais ou une commande de désactivation de ce module d'accès radio.

Dans un mode de réalisation particulier, le module 213 d'émission/réception communique avec le module correspondant d'un autre dispositif relais au moyen de courants électriques porteurs.

Dans un mode de réalisation particulier, le module 214 d'accès radio est agencé pour établir une connexion radio avec le dispositif périphérique 23, pour obtenir une valeur prise par une caractéristique et pour envoyer la valeur en retour.

Nous allons maintenant décrire en référence à la figure 4 une passerelle d'accès 20 dans un mode particulier de réalisation, dans lequel la passerelle d'accès joue un rôle d'intermédiaire. Une telle passerelle d'accès permet à au moins un dispositif d'un réseau local d'accéder à un réseau de communication étendu et est agencée pour coopérer avec un dispositif relais afin de permettre un accès à une valeur d'une caractéristique gérée par un dispositif périphérique 23. Elle comprend notamment :
- une zone mémoire 202, agencée pour mémoriser un programme qui comprend des instructions de code pour mettre en œuvre les étapes du procédé d'accès, tel que décrit précédemment ;
- un processeur 201 pour exécuter des instructions de code de modules logiciels ;
- un module 203 d'émission/réception, agencé pour envoyer des données au dispositif relais et en recevoir en provenance du dispositif relais ;
- un module 204 d'accès au réseau de communication étendu ;
- un module 205 de commande, agencé pour envoyer une commande au dispositif relais ;
- une zone mémoire 206, agencée pour mémoriser une liste de dispositifs périphériques présents dans la zone de service du réseau local.

Il est ici souligné que la passerelle d'accès 20 comprend également d'autres modules de traitement, non représentés sur la figure 4, agencés pour mettre en œuvre les différentes fonctions d'une passerelle d'accès.

Le module 203 d'émission/réception est par exemple un module d'interface Ethernet. Le module 203 d'émission/réception est notamment agencé pour :
- commander au dispositif relais se trouvant dans la zone de couverture radio du téléphone mobile 22 de simuler le dispositif périphérique se trouvant dans une zone de couverture radio d'un autre dispositif relais 24,
- recevoir une demande de lecture d'une valeur prise par une caractéristique gérée par le dispositif périphérique en provenance du dispositif relais et envoyer cette demande à l'autre dispositif relais ;
- recevoir la valeur en provenance de l'autre dispositif relais, cet autre dispositif relais l'ayant obtenue par interrogation du dispositif périphérique, et envoyer la valeur au dispositif relais pour transmission au dispositif maître.

La technique d'accès est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 213, 214, 215 sont agencés pour mettre en œuvre le procédé d'accès précédemment décrit. Il s'agit de préférence d'un module logiciel comprenant des instructions logicielles pour faire exécuter les étapes du procédé d'accès précédemment décrit, mises en œuvre par un dispositif relais. L'invention concerne donc aussi :
- un programme pour un dispositif relais, comprenant des instructions de code de programme destinées à commander l'exécution des étapes du procédé d'accès précédemment décrit, lorsque ledit programme est exécuté par ce dispositif relais ;
- un support d'enregistrement lisible par un dispositif relais sur lequel est enregistré le programme pour un dispositif relais.

Dans un mode de réalisation particulier, les modules 203, 204, 205 sont agencés pour mettre en œuvre le procédé d'accès précédemment décrit. Il s'agit de préférence d'un module logiciel comprenant des instructions logicielles pour faire exécuter les étapes du procédé d'accès précédemment décrit, mises en œuvre par une passerelle d'accès. L'invention concerne donc aussi :
- un programme pour une passerelle d'accès, comprenant des instructions de code de programme destinées à commander l'exécution des étapes du procédé d'accès précédemment décrit, lorsque ledit programme est exécuté par cette passerelle d'accès ;
- un support d'enregistrement lisible par une passerelle d'accès sur lequel est enregistré le programme pour une passerelle.

Les modules logiciels peuvent être stockés dans ou transmis par un support de données. Celui-ci peut être un support matériel de stockage, par exemple un CD-ROM, un moyen d'enregistrement magnétique, par exemple une disquette magnétique ou un disque dur. D'autre part, le support de données peut être un support de transmission tel qu'un signal électrique, optique ou radio, qui peut être acheminé via un câble électrique ou optique, par radio ou par d'autres moyens. Les instructions de code de programme peuvent être en particulier téléchargées sur un réseau de type Internet.

Alternativement, le support de données peut être un circuit intégré dans lequel le programme est incorporé, le circuit étant adapté pour exécuter ou pour être utilisé dans l'exécution du procédé de détermination décrit précédemment.

L'invention concerne également un système dans un réseau local 2, ce système comprenant un dispositif relais tel que décrit précédemment et un autre dispositif relais, comprenant un module d'accès radio, agencé pour obtenir une valeur prise par la caractéristique, et un module d'émission et de réception, agencé pour recevoir une demande de lecture d'une valeur prise par la caractéristique en provenance du dispositif relais et pour lui envoyer la valeur.

Dans un mode de réalisation particulier, le système comprend en outre la passerelle d'accès décrite précédemment.

## Revendications

1. Procédé d'accès par un dispositif maître (22) à une valeur prise par une caractéristique gérée par un dispositif périphérique (23) dans un réseau local, lesdits dispositifs maître et périphérique étant aptes à communiquer par une connexion radio de type BLE, « Bluetooth Low Energy », ledit procédé comprenant les étapes suivantes mises en œuvre par un premier dispositif relais (21) appartenant au réseau local et se trouvant dans une zone de couverture radio de type BLE du dispositif maître, les échanges dans le réseau local s'effectuant conformément à un protocole réseau de type UPnP :
- réception (I1) d'une commande de simulation du dispositif périphérique en provenance d'un dispositif du réseau local, ledit dispositif périphérique se trouvant dans une zone de couverture radio de type BLE d'un deuxième dispositif relais (24) appartenant au réseau local, ladite commande de simulation comprenant un identifiant et une adresse MAC du dispositif périphérique ;
- transmission d'un message d'annonce de type conforme au protocole BLE, comprenant ledit identifiant et ladite adresse MAC du dispositif périphérique, le premier dispositif relais annonçant la présence du dispositif périphérique dans la zone de couverture radio de type BLE du dispositif maître ;
- établissement (I2) d'une connexion radio de type BLE avec le dispositif maître ;
- réception (I3) en provenance du dispositif maître et au moyen de ladite connexion radio d'une demande de lecture d'une valeur prise par une caractéristique gérée par le dispositif périphérique ;
- réception (I4) de ladite valeur en provenance du deuxième dispositif relais, ledit deuxième dispositif relais l'ayant obtenue par interrogation du dispositif périphérique, et
- envoi au dispositif maître de ladite valeur au moyen de ladite connexion radio.

2. Procédé d'accès selon la revendication 1, dans lequel le premier dispositif relais reçoit un identifiant de la caractéristique obtenu par le deuxième dispositif relais auprès du dispositif périphérique et le transmet au dispositif maître au moyen de la connexion radio.

3. Procédé d'accès selon la revendication 1, comprenant pour le deuxième dispositif relais, une écoute de fréquences radio pour détecter la présence du dispositif périphérique et une annonce de la présence du dispositif périphérique.

4. Procédé d'accès selon la revendication 1, dans lequel le premier dispositif relais annonce une présence d'une pluralité de dispositifs périphériques détectés dans une zone de service d'un réseau local.

5. Procédé d'accès selon la revendication 1, dans lequel les premier et deuxième dispositifs relais communiquant par l'intermédiaire d'une passerelle d'accès (20) d'un réseau local (2), ledit procédé comprend en outre une commande d'écoute de fréquences à un des dispositifs relais, afin de détecter une présence du dispositif périphérique dans une zone de service du réseau local.

6. Premier dispositif relais (21) dans un réseau local, ledit premier dispositif relais appartenant au réseau local et se trouvant dans une zone de couverture radio de type BLE, « Bluetooth Low Energy », d'un dispositif maître (22), les échanges dans le réseau local s'effectuant conformément à un protocole réseau de type UPnP, ledit premier dispositif relais comprenant :
- un module d'émission et de réception (213), agencé pour recevoir une commande de simulation du dispositif périphérique en provenance d'un dispositif du réseau local, ledit dispositif périphérique se trouvant dans une zone de couverture radio de type BLE d'un deuxième dispositif relais (24) appartenant au réseau local, ladite commande de simulation comprenant un identifiant et une adresse MAC du dispositif périphérique, et pour recevoir une valeur prise par une caractéristique gérée par le dispositif périphérique en provenance du deuxième dispositif relais, ledit deuxième dispositif relais l'ayant obtenue par interrogation du dispositif périphérique ;
- un module d'accès radio (214) de type BLE, agencé pour transmettre un message d'annonce de type conforme au protocole BLE, comprenant ledit identifiant et ladite adresse MAC du dispositif périphérique, le premier dispositif relais annonçant la présence du dispositif périphérique dans la zone de couverture radio du dispositif maître, pour établir une connexion radio de type BLE avec le dispositif maître en simulant la présence du dispositif périphérique dans la zone de couverture radio du dispositif maître, pour recevoir en provenance du dispositif maître et au moyen de la connexion radio une demande de lecture d'une valeur prise par la caractéristique et pour envoyer la valeur en retour.

7. Système dans un réseau local, ledit système comprenant un premier dispositif relais selon la revendication 6 et un deuxième dispositif relais, ledit deuxième dispositif relais comprenant :
- un module d'accès radio, agencé pour obtenir une valeur prise par la caractéristique ;
- un module d'émission et de réception, agencé pour recevoir une demande de lecture d'une valeur prise par la caractéristique en provenance du premier dispositif relais et pour lui envoyer la valeur.

8. Système selon la revendication 7, dans lequel les modules d'émission et de réception des dispositifs relais communiquent au moyen de courants électriques porteurs.

9. Système selon la revendication 7, comprenant en outre une passerelle d'accès, jouant un rôle d'intermédiaire entre les deux dispositifs relais.

10. Programme pour un dispositif relais, comprenant des instructions de code de programme destinées à commander l'exécution des étapes du procédé d'accès selon l'une des revendications 1 à 5 mises en œuvre par le dispositif relais, lorsque ledit programme est exécuté par ledit dispositif.

11. Support d'enregistrement lisible par un dispositif relais sur lequel est enregistré le programme selon la revendication 10.

## Patentansprüche

1. Verfahren für den Zugriff, durch eine Master-Vorrichtung (22), auf einen Wert einer Eigenschaft, die durch eine periphere Vorrichtung (23) in einem lokalen Netzwerk verwaltet wird, wobei die Master-Vorrichtung und die periphere Vorrichtung dazu fähig sind, über eine Funkverbindung vom Typ BLE, "Bluetooth Low Energy", zu kommunizieren, wobei das Verfahren die folgenden Schritte beinhaltet, die durch eine erste Relaisvorrichtung (21) umgesetzt werden, die zu dem lokalen Netzwerk gehört und sich innerhalb eines BLE-Funkabdeckungsbereichs der Master-Vorrichtung befindet, wobei die Austausche in dem lokalen Netzwerk gemäß einem Netzwerkprotokoll vom Typ UPnP erfolgen:
- Empfangen (I1) eines Befehls zur Simulation der peripheren Vorrichtung von einer Vorrichtung des lokalen Netzwerks, wobei sich die periphere Vorrichtung in einem BLE-Funkabdeckungsbereich einer zweiten Relaisvorrichtung (24), die zu dem lokalen Netzwerk gehört, befindet, wobei der Simulationsbefehl eine Kennung und eine MAC-Adresse der peripheren Vorrichtung beinhaltet;
- Übertragen einer Bekanntgabenachricht eines Typs, der dem BLE-Protokoll entspricht, die die Kennung und die MAC-Adresse der peripheren Vorrichtung beinhaltet, wobei die erste Relaisvorrichtung die Anwesenheit der peripheren Vorrichtung in dem BLE-Funkabdeckungsbereich der Master-Vorrichtung bekanntgibt;
- Herstellen (12) einer BLE-Funkverbindung mit der Master-Vorrichtung;
- Empfangen (13), von der Master-Vorrichtung und mittels der Funkverbindung, einer Aufforderung zum Lesen eines Werts einer Eigenschaft, die durch die periphere Vorrichtung verwaltet wird;
- Empfangen (14) des Werts von der zweiten Relaisvorrichtung, wobei die zweite Relaisvorrichtung diesen durch eine Abfrage der peripheren Vorrichtung erhalten hat, und
- Senden des Werts an die Master-Vorrichtung mittels der Funkverbindung.

2. Zugriffsverfahren nach Anspruch 1, wobei die erste Relaisvorrichtung eine Kennung der Eigenschaft, die die zweite Relaisvorrichtung von der peripheren Vorrichtung erhalten hat, empfängt und diese mittels der Funkverbindung an die Master-Vorrichtung überträgt.

3. Zugriffsverfahren nach Anspruch 1, das für die zweite Relaisvorrichtung ein Suchen nach Funkfrequenzen, um die Anwesenheit der peripheren Vorrichtung zu detektieren, und eine Bekanntgabe der Anwesenheit der peripheren Vorrichtung beinhaltet.

4. Zugriffsverfahren nach Anspruch 1, wobei die erste Relaisvorrichtung eine Anwesenheit einer Vielzahl von peripheren Vorrichtungen, die in einem Dienstbereich eines lokalen Netzwerks detektiert werden, bekanntgibt.

5. Zugriffsverfahren nach Anspruch 1, wobei die erste und die zweite Relaisvorrichtung über ein Zugangs-Gateway (20) eines lokalen Netzwerks (2) miteinander kommunizieren, wobei das Verfahren ferner einen Frequenzsuchbefehl für eine der Relaisvorrichtungen beinhaltet, um eine Anwesenheit der peripheren Vorrichtung in einem Dienstbereich des lokalen Netzwerks zu detektieren.

6. Erste Relaisvorrichtung (21) in einem lokalen Netzwerk, wobei die erste Relaisvorrichtung zu dem lokalen Netzwerk gehört und sich in einem Funkabdeckungsbereich vom Typ BLE, "Bluetooth Low Energy", einer Master-Vorrichtung (22) befindet, wobei die Austausche in dem lokalen Netzwerk gemäß einem Netzwerkprotokoll vom Typ UPnP erfolgen, wobei die erste Relaisvorrichtung Folgendes beinhaltet:
- ein Sende- und Empfangsmodul (213), das dazu angeordnet ist, einen Befehl zur Simulation der peripheren Vorrichtung von einer Vorrichtung des lokalen Netzwerks zu empfangen, wobei sich die periphere Vorrichtung in einem BLE-Funkabdeckungsbereich einer zweiten Relaisvorrichtung (24), die zu dem lokalen Netzwerk gehört, befindet, wobei der Simulationsbefehl eine Kennung und eine MAC-Adresse der peripheren Vorrichtung beinhaltet, und einen Wert einer Eigenschaft, die durch die periphere Vorrichtung verwaltet wird, von der zweiten Relaisvorrichtung zu empfangen, wobei die zweite Relaisvorrichtung diesen durch eine Abfrage der peripheren Vorrichtung erhalten hat;
- ein Funkzugriffsmodul (214) vom Typ BLE, das dazu angeordnet ist, eine Bekanntgabenachricht eines Typs, der dem BLE-Protokoll entspricht, zu übertragen, die die Kennung und die MAC-Adresse der peripheren Vorrichtung beinhaltet, wobei die erste Relaisvorrichtung die Anwesenheit der peripheren Vorrichtung in dem Funkabdeckungsbereich der Master-Vorrichtung bekanntgibt, um durch Simulation der Anwesenheit der peripheren Vorrichtung in dem Funkabdeckungsbereich der Master-Vorrichtung eine BLE-Funkverbindung mit der Master-Vorrichtung herzustellen, um von der Master-Vorrichtung und mittels der Funkverbindung eine Aufforderung zum Lesen eines Werts der Eigenschaft zu empfangen und im Gegenzug den Wert zu senden.

7. System in einem lokalen Netzwerk, wobei das System eine erste Relaisvorrichtung nach Anspruch 6 und eine zweite Relaisvorrichtung beinhaltet, wobei die zweite Relaisvorrichtung Folgendes beinhaltet:
- ein Funkzugriffsmodul, das dazu angeordnet ist, einen Wert der Eigenschaft zu erhalten;
- ein Sende- und Empfangsmodul, das dazu angeordnet ist, eine Aufforderung zum Lesen eines Werts der Eigenschaft von der ersten Relaisvorrichtung zu empfangen und dieser den Wert zu senden.

8. System nach Anspruch 7, wobei die Sende- und Empfangsmodule der Relaisvorrichtungen mittels Powerline-Technologie miteinander kommunizieren.

9. System nach Anspruch 7, das ferner ein Zugangs-Gateway beinhaltet, das eine Vermittlerrolle zwischen den zwei Relaisvorrichtungen übernimmt.

10. Programm für eine Relaisvorrichtung, das Programmcodeanweisungen beinhaltet, die dazu bestimmt sind, die Ausführung der Schritte des Zugriffsverfahrens nach einem der Ansprüche 1 bis 5, die durch die Relaisvorrichtung umgesetzt werden, zu steuern, wenn das Programm von der Vorrichtung ausgeführt wird.

11. Durch eine Relaisvorrichtung lesbares Aufzeichnungsmedium, auf dem das Programm nach Anspruch 10 aufgezeichnet ist.

## Claims

1. Method for a master device (22) to access a value taken by a characteristic managed by a peripheral device (23) in a local area network, said master and peripheral devices being able to communicate by means of a radio connection of BLE, Bluetooth Low Energy, type, said method comprising the following steps implemented by a first relay device (21) belonging to the local area network and being located in an area of radio coverage of BLE type of the master device, the exchanges in the local area network being performed in accordance with a network protocol of UPnP type:
- receiving (I1) a command to simulate the peripheral device from a device in the local area network, said peripheral device being located in an area of radio coverage of BLE type of a second relay device (24) belonging to the local area network, said simulation command comprising an identifier and a MAC address of the peripheral device;
- transmitting an advertisement message of a type which is in accordance with the BLE protocol, comprising said identifier and said MAC address of the peripheral device, the first relay device advertising the presence of the peripheral device in the area of radio coverage of BLE type of the master device;
- establishing (12) a radio connection of BLE type with the master device;
- receiving (13), from the master device and by means of said radio connection, a request to read a value taken by a characteristic managed by the peripheral device;
- receiving (14) said value from the second relay device, said second relay device having obtained it by querying the peripheral device, and
- sending the master device said value by means of said radio connection.

2. Access method according to Claim 1, in which the first relay device receives an identifier of the characteristic obtained by the second relay device from the peripheral device and transmits it to the master device by means of the radio connection.

3. Access method according to Claim 1, comprising, for the second relay device, scanning radio frequencies in order to detect the presence of the peripheral device and advertising the presence of the peripheral device.

4. Access method according to Claim 1, in which the first relay device advertises a presence of a plurality of peripheral devices detected in a service area of a local area network.

5. Access method according to Claim 1, in which, with the first and second relay devices communicating via an access gateway (20) of a local area network (2), said method further comprises a command for one of the relay devices to scan frequencies, in order to detect a presence of the peripheral device in a service area of the local area network.

6. First relay device (21) in a local area network, said first relay device belonging to the local area network and being located in an area of radio coverage of BLE, Bluetooth Low Energy, type, of a master device (22), the exchanges in the local area network being performed in accordance with a network protocol of UPnP type, said first relay device comprising:
- a transceiver module (213), arranged to receive a command to simulate the peripheral device from a device in the local area network, said peripheral device being located in an area of radio coverage of BLE type of a second relay device (24) belonging to the local area network, said simulation command comprising an identifier and a MAC address of the peripheral device, and to receive a value taken by a characteristic managed by the peripheral device from the second relay device, said second relay device having obtained it by querying the peripheral device;
- a radio access module (214) of BLE type, arranged to transmit an advertisement message of a type which is in accordance with the BLE protocol, comprising said identifier and said MAC address of the peripheral device, the first relay device advertising the presence of the peripheral device in the area of radio coverage of the master device, in order to establish a radio connection of BLE type with the master device by simulating the presence of the peripheral device in the area of radio coverage of the master device, in order to receive, from the master device and by means of the radio connection, a request to read a value taken by the characteristic and in order to send the value in return.

7. System in a local area network, said system comprising a first relay device according to Claim 6 and a second relay device, said second relay device comprising:
- a radio access module, arranged to obtain a value taken by the characteristic;
- a transceiver module, arranged to receive a request to read a value taken by the characteristic from the first relay device and to send it the value.

8. System according to Claim 7, in which the transceiver modules of the relay devices communicate by means of power line currents.

9. System according to Claim 7, further comprising an access gateway, playing a role of intermediary between the two relay devices.

10. Program for a relay device, comprising program code instructions intended to command the steps of the access method according to any one of Claims 1 to 5 implemented by the relay device to be executed, when said program is executed by said device.

11. Storage medium which may be read by a relay device on which the program according to Claim 10 is stored.
